# EUROPEAN PATENT APPLICATION

(11) **EP 4 160 193 A1**
(43) Date of publication of application: **05.04.2023**
(21) Application number: 20737225.1
(22) Date of filing: 26.05.2020
(51) Int. Cl.: G01N 21/88, G01N 21/95

(54) **SURFACE DEFECT INSPECTION DEVICE, VEHICLE BODY SURFACE DEFECT INSPECTION LINE AND SURFACE DEFECT INSPECTION PROCESS**

(71) Applicant: CIN Advanced Systems Group S.L., 20500 Arrasate/Mondragon (ES)
(72) Inventor: MARINA JUAREZ, Jorge, 20500 Arrasate - Mondragon (ES); ALVAREZ GARCIA, Ignacio, 20500 Arrasate - Mondragon (ES); PEREZ GARCIA, Daniel, 20500 Arrasate - Mondragon (ES)
(74) Representative: Igartua, Ismael
(86) International application number: PCT/ES2020/070345
(87) International publication number: WO 2021/240025

(57) **Abstract**

Surface defect inspection device comprising translation means (1) movable according to an advance direction (A) in a first axis (X), a supporting structure (3) with inspection means for inspecting the surface of a part (2) having means for emitting at least one light profile (5) on the part (2) and means for viewing the light reflected by the light profile (5), and a control unit which is configured to process the reflected light and detect surface defects in the part (2), wherein the inspection means comprise at least one mobile inspection head (4), and the control unit is additionally configured to move the inspection head (4) in accordance with the light reflected by the light profile (5) while the translation means (1) are moved in the advance direction (A), orienting the light profile (5) towards the part (2).

## Description

### TECHNICAL FIELD

The present invention relates to the inspection of surface defects.

### PRIOR ART

Inspecting the surface of parts for detecting surface defects is known in the industry. For example, in the automotive industry, inspecting the component parts of vehicles, or the whole body of vehicles, to detect defects on the surface, before or after carrying out the painting operations, is known.

EP995108A1 shows a surface defect inspection device comprising translation means movable according to an advance direction in a first axis, a supporting structure with inspection means for inspecting the surface of a part, the inspection means have means for emitting at least one light profile on the part and means for viewing the light reflected by the light profile emitted on the part, and a control unit which is configured to process the reflected light and detect surface defects in the part.

### DISCLOSURE OF THE INVENTION

The object of the invention is to provide a surface defect inspection device, a vehicle body surface defect inspection line and a surface defect inspection process, as defined in the claims.

One aspect of the invention relates to a surface defect inspection device comprising translation means movable according to an advance direction in a first axis, a supporting structure with inspection means for inspecting the surface of a part, the inspection means have means for emitting at least one light profile on the part and means for viewing the light reflected by the light profile emitted on the part, and a control unit which is configured to process the reflected light and detect surface defects in the part.

The inspection means comprise at least one mobile inspection head, and the control unit is additionally configured to move the inspection head in accordance with the light reflected by the light profile while the translation means are moved in the advance direction, orienting the light profile towards the part.

Another aspect of the invention relates to a vehicle body surface defect inspection line using the surface defect inspection device.

Another aspect of the invention relates to a surface defect inspection process by means of a surface defect inspection device comprising translation means movable according to an advance direction in a first axis, a supporting structure with inspection means for inspecting the surface of a part, the inspection means have means for emitting at least one light profile on the part and means for viewing the light reflected by the light profile emitted on the part, and a control unit which is configured to process the reflected light and detect surface defects in the part.

The process comprises:
- moving the translation means in the advance direction,
- emitting the light profile on the part,
- viewing the light reflected by the light profile emitted on the part, and
- moving the inspection head in accordance with the light reflected by the light profile while the translation means are moved in the advance direction, orienting the light profile towards the part.

The mobility of the inspection head according to the reflected light allows orienting the light profile, adapting it to the surface of the part, and therefore achieving the better orientation of the head for inspecting the part. Thus, the surface of the part can be inspected in real time while the translation means are moved. The light reflected by the light profile is used to command the movement of the inspection head and also to detect surface defects in the part.

EP995108A1 shows a surface defect inspection device having inspection means with illuminators and cameras which can pivot with respect to a supporting structure for arranging the illuminators and the cameras in a suitable position for carrying out the inspection. The surface of the part to be inspected is memorized in a control unit, therefore the arrangement of the illuminators and the cameras is carried out in accordance with the type of part which is memorized in the control unit. This forces having to know the topography of the surface of the part in order to inspect it. However, the inspection device of the invention does not require knowing the surface of the part to be inspected, since the inspection head moves and adapts to the surface of the part while the translation means are moved, and at the same time the inspection is carried out, the light reflected by the light profile emitted on the part being used in both cases. Thus, the device can be used to inspect parts of different geometries, without needing to know the topography of the part, or requiring manually programming the movements of the inspection head in order to orient it towards the part and maintain it within its measurement range while the inspection is carried out.

These and other advantages and features of the invention will become evident in view of the figures and of the detailed description of the invention.

### DESCRIPTION OF THE DRAWINGS

Figure 1 shows a perspective view of the surface defect inspection device.
Figure 2 shows a perspective view of an inspection head of the device of the previous figure.

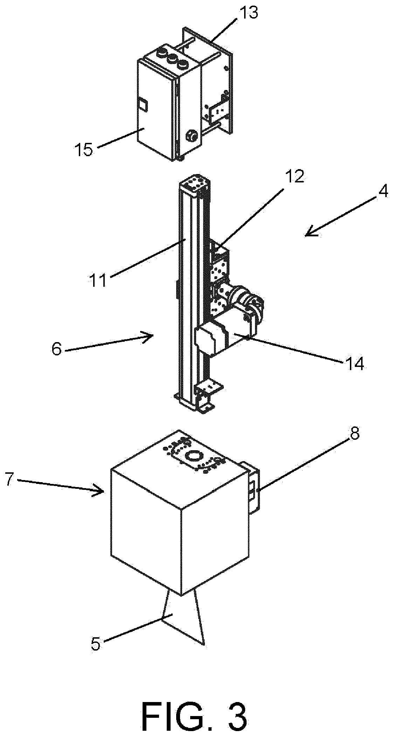

Figure 3 shows an exploded view of the inspection head of the previous figure.
Figures 4 to 8 show different positions in which the light profile emitted by the sensor of the inspection head can be oriented.
Figure 8 shows a perspective view of the surface defect inspection device applicable to a vehicle body surface defect inspection line.

### DETAILED DISCLOSURE OF THE INVENTION

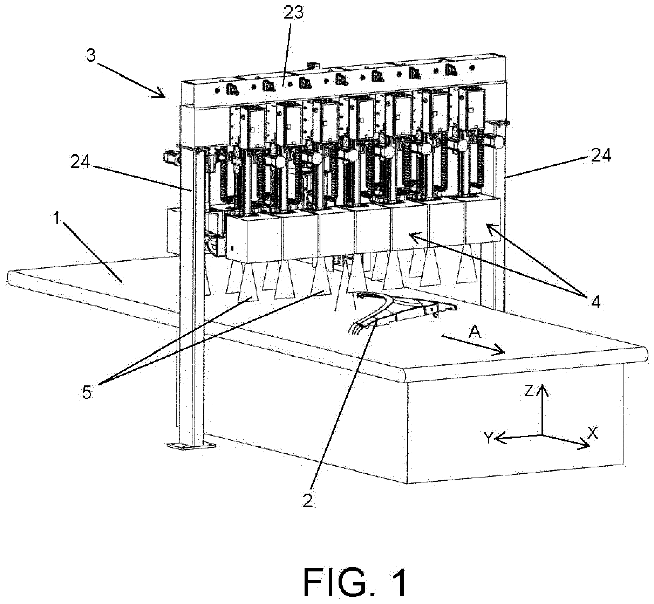

Figure 1 shows the surface defect inspection device of the invention comprising translation means 1 movable according to an advance direction A in a first axis X, and a supporting structure 3 with inspection means for inspecting the surface of a part 2.

The inspection means comprise at least one mobile inspection head 4 having means for emitting at least one light profile 5 on the part 2 and means for viewing the light reflected by the light profile 5 emitted on the part 2.

The device has a control unit (not depicted) which is configured to process the reflected light and detect surface defects in the part 2. The surface defects are determined by means of known techniques, such as three-dimensional laser triangulation for example.

The control unit is additionally configured to move the inspection head 4 in accordance with the light reflected by the light profile 5 while the translation means 1 are moved in the advance direction A, orienting the light profile 5 towards the part 2, such that the inspection head 4 adapts to the surface of the part 2 as the translation means 1 are moved in the advance direction A of the first axis X, to be arranged in the best possible orientation for carrying out the inspection of the surface of the part 2.

The processing of the reflected light for detecting surface defects in the part 2 and the processing of said light for moving the inspection head 4, can be carried out by one and the same control unit which is physically located in one and the same place, or can be carried out by two different control units physically located in different places, in any case, the light reflected by the light profile 5 is used to detect the surface defects and also to command the movements of the inspection head 4.

As shown in the figures, the translation means 1 are preferably configured to translate the part 2 according to the advance direction A in the first axis X, while the supporting structure 3 is static. Alternatively, the translation means 1 are configured to translate the supporting structure 3 with the inspection head 4 according to the advance direction A in the first axis X, while the part 2 is static.

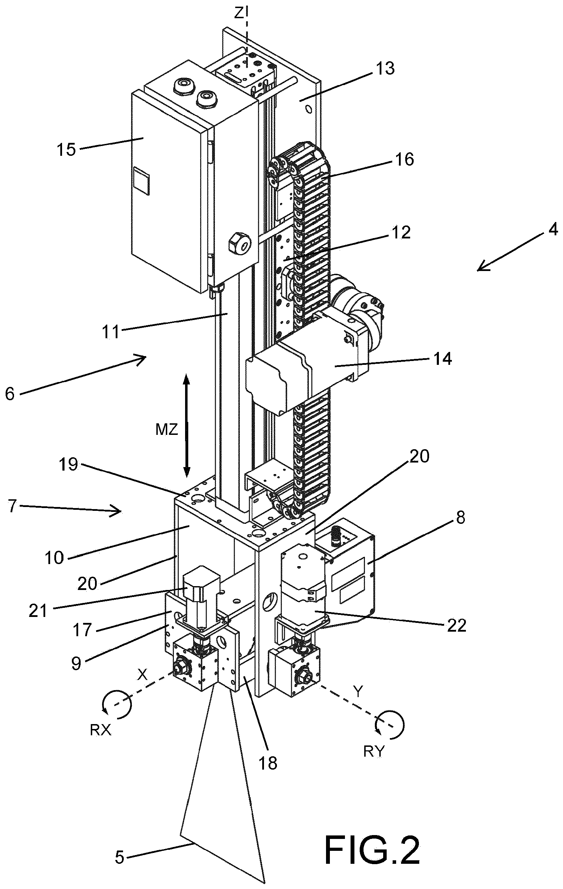

As observed in Figures 1 and 2, the inspection head 4 is mobile with respect to the supporting structure 3 according to a first rotational movement RX on the first axis X, a second rotational movement RY on a second axis Y, which is transverse to the first axis X, and a third translational movement MZ in a third axis Z, which is perpendicular to the plane formed by the first axis X and the second axis Y, the control unit being configured to move the inspection head 4 according to the rotational movements RX, RY and translational movement MZ in accordance with the light reflected by the light profile 5 while the translation means 1 are moved, orienting the light profile 5 towards the part 2.

The inspection head 4 comprises a linear unit 6 movable in the third axis Z which has at one of its ends a support 7 of a sensor 8 having the means for emitting the light profile 5 and the means for viewing the light reflected by the light profile 5.

The support 7 of the sensor 8 has a first frame 9 and a second frame 10, the first frame 9 is joined in rotation with the sensor 8 to rotate the sensor 8 in the first rotational movement RX on the first axis X, and the second frame 10 is joined in rotation with the first frame 9 to rotate the sensor 8 and the first frame 9 in the second rotational movement RY on the second axis Y.

The linear unit 6 has a mobile part 11 which is vertically movable in the third axis Z with respect to a fixed part 12. The mobile part 11 is joined by its lower end with the support 7 of the sensor 8, and the fixed part 12 is joined to a plate 13 which is joined with the supporting structure 3. In the fixed part 12 there is arranged a drive 14 for vertically driving the mobile part 11 of the linear unit 6 in the third axis Z.

The first frame 9 has a U shape with an upper part 17 and two side flanges 18 projecting from the upper part 17, while the second frame 10 also has a U shape with an upper part 19 and two side flanges 20 projecting from the upper part 19. The upper part 17 of the first frame 9 is joined in rotation with the sensor 8, and in this upper part 17 there is arranged a first drive 21 for driving in rotation the sensor 8 on the first axis X. In addition, one of the side flanges 18 of the first frame 9 is joined in rotation to one of the side flanges 20 of the second frame 10, and the other one of the side flanges 18 of the first frame 9 is joined in rotation to the other one of the side flanges 20 of the second frame 10. In one of the side flanges 20 of the second frame 10 there is arranged a second drive 22 for rotating the sensor 8 and the first frame 9 on the second axis Y.

Coupled to the plate 13 connecting the linear unit 6 with the supporting structure 3 there is arranged an electronics box 15 of the inspection device. The linear unit 6 has a cable holder 16 carrying power and control signals from the electronics box 15 to the sensor 8 and the drives 14, 21 and 22.

With this arrangement of the inspection head 4, the support 7 of the sensor 8 is vertically movable in axis Z, while the sensor 8, which is arranged at the lower end of the head 4, and therefore closest to the surface of the part 2 to be inspected, is the one which has the rotational movements RX and RY in axes X and Y. The vertical translational movement MZ is used so that the sensor 8 can adapt to changes in height in the part 2, and the rotational movements RX and RY are used so that the sensor 8 can adapt to different angles that the surface of the part 2 has, keeping the sensor 8 in its working range while the translation means 1 are moved, making the part 2 advance.

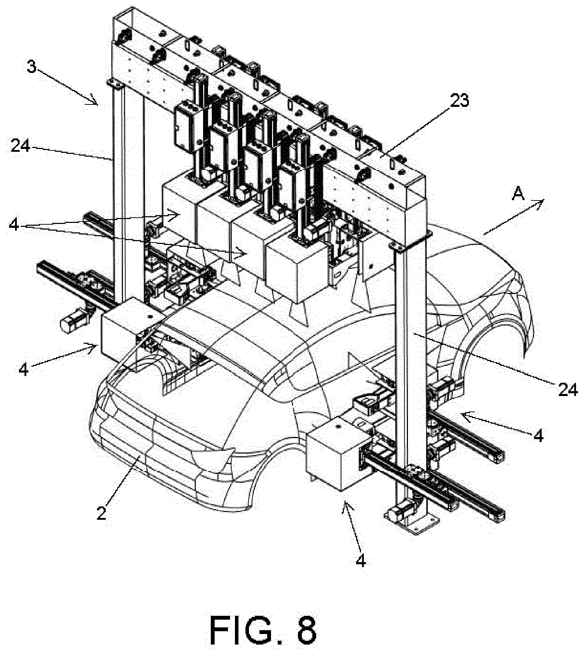

As shown in Figure 1 and 8, the supporting structure 3 is a gantry which is arranged in an upper position above the translation means 1, and the translation means 1 are configured to translate the part 2 according to the advance direction A in the first axis X. Thus, the inspection head 4 is mobile with respect to the supporting structure 3, such that the vertical translational movement MZ allows moving the inspection head 4 closer to or away from the translation means 1, and the rotational movements RX and RY allow orienting the light profile 5 towards the part 2 which is translated on the translation means 1.

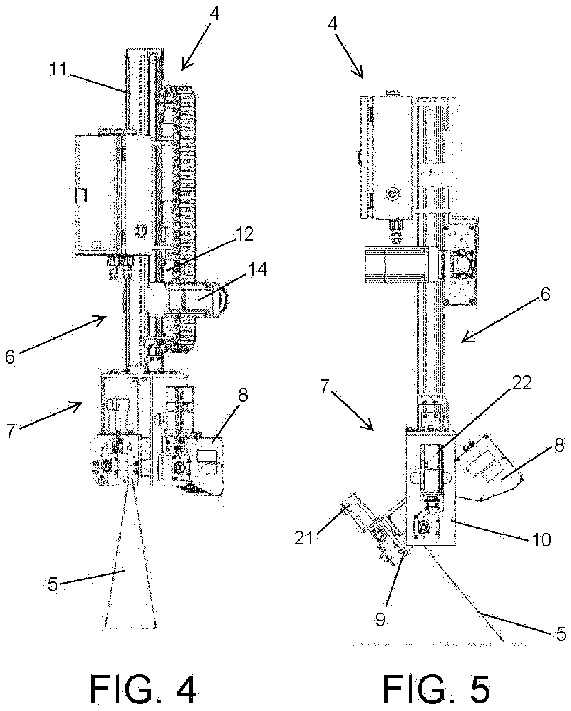

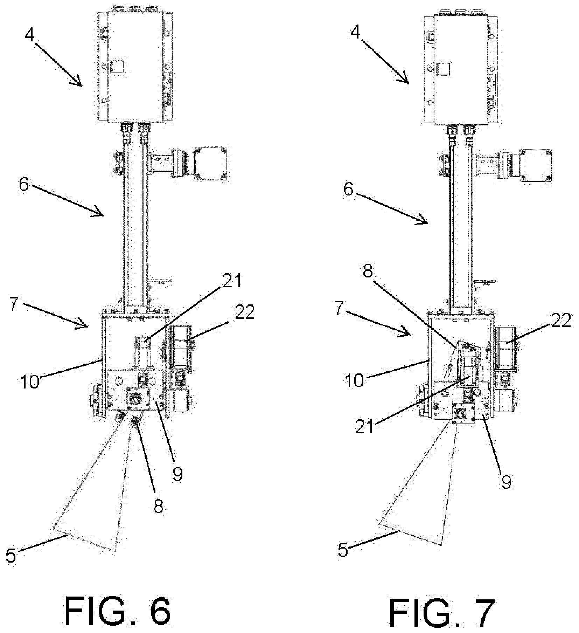

Figure 4 shows the third translational movement MZ of the inspection head 4 in the third axis Z. Figure 5 shows the second rotational movement RY of the inspection head 4 in the second axis Y. Figure 6 shows the first rotational movement RX of the inspection head 4 in the first axis X. Figure 7 shows a combination of the rotational movements RX and RY of the inspection head 4 in axes X and Y.

The translation means 1 are a conveyor belt onto which the part 2 moves, for example, the part 2 is a component part of a vehicle, as shown in Figure 1. The translation means can also be a driving structure of the part 2, for example, the part 2 can be the body of a vehicle, as shown in Figure 8 (For the sake of clarity, the translation means are not depicted in Figure 8).

Alternatively, the translation means 1 can be guides moving the supporting structure 3 according to the advance direction A in the first axis X, the part 2 being static.

The translation means 1 can be part of a vehicle assembly line, such that the inspection device can be integrated in the line in a non-invasive manner, taking advantage of the translation means that the line has. Thus, the inspection device is especially suitable for being arranged in a vehicle body surface defect inspection line. The device can be arranged at the exit of a press line in which the component parts of the vehicles are manufactured, or at a point before or after the painting process of the body of the vehicle.

The translation means 1 are configured to translate the part 2, or the supporting structure 3, in the advance direction A in a continuous and stable manner, it being therefore a smooth movement, without the occurrence of abrupt changes which can hinder the processing of the reflected light.

The supporting structure 3 has a set of inspection heads 4 which are arranged in a first row upstream of the supporting structure 3 and a second row downstream of the supporting structure 3 according to the advance direction A of the translation means 1, and wherein the heads are arranged in an alternate manner, a head of the second row being arranged between two heads of the first row. Thus, the inspection heads 4 are arranged in a staggered manner, forming equilateral triangles between them. This arrangement is suitable for covering the width of the translation means 1 and so that there are no dead zones of the part 2 without inspection and so that the light profiles 5 do not overlap one another, and so that the reflected light of a sensor 8 is not captured by another one.

Preferably, the light profile 5 is emitted on the part 2 in a direction transverse to the advance direction A of the translation means 1, and even more preferably in a direction perpendicular to the advance direction A of the translation means 1, such that covering the width of the translation means 1 is aided, as shown in Figures 1 and 8.

As shown in Figure 8, the gantry is formed by a crossbeam 23 supporting the inspection heads 4 and side columns 24 supporting other inspection heads 4 for laterally inspecting the part 2. Said configuration is suitable for inspecting surface defects of vehicle bodies.

Each side column 24 has a first inspection head 4 arranged upstream of the column 24 and a second inspection head 4 arranged downstream of the column 24 according to the advance direction A of the translation means 1.

The inspection heads 4 of the side columns 24 can be fixed to the columns 24 with a predefined orientation towards the sides of the body 2, and therefore they do not require being mobile but rather they only need to have means for emitting and viewing the light reflected by a light profile. In addition, it has been provided that all the inspection heads 4 arranged in the crossbeam 23 of the gantry are mobile in axes X, Y, and Z, nevertheless, in accordance with the part 2 to be inspected, some of the heads 4 could be fixed, or only mobile in axis Z. For example, the heads 4 of the crossbeam 23 closest to the side columns 24 could be fixed, or only mobile in axis Z, and be oriented towards the translation means 1.

Preferably, the inspection head 4 has a laser profilometer 8. The sensor 8 is a laser profilometer having an emitter for emitting a laser line 5 on the surface of the part 2 and a reflector having a lens for receiving the laser line 5 reflected by the surface of the part 2 and sending it to an image sensor for its processing. The control unit processes the information of the distance between the profilometer 8 and the laser line 5, and obtains a three-dimensional reconstruction of the surface of the part 2 illuminated by the laser line 5.

The surface defect inspection process with the inspection device described above comprises:
- moving the translation means 1 in the advance direction A,
- emitting the light profile 5 on the part 2,
- viewing the light reflected by the light profile 5 emitted on the part 2, and
- moving the inspection head 4 in accordance with the light reflected by the light profile 5 while the translation means 1 are moved in the advance direction A, orienting the light profile 5 towards the part 2.

The process allows calculating in real time the topography of the surface of the part 2, and foreseeing how the topography will evolve so that the sensor 8 of the inspection head 4 can adapt to it and always achieve that it is in the best possible orientation to search for surface defects. Thus, it is not necessary to program the movements of the sensor in advance, which can be quite a laborious process, furthermore, it is not necessary for the part to always be located in one and the same area because, if the movements had to be programmed in advance, with a change of the position of the part, it would be necessary to recalculate the movements to achieve a better adjustment of the position of the sensors.

The light profile 5 emitted on the part 2, and therefore the light reflected by the light profile 5, varies as the translation means 1 advance, such that the inspection head 4 moves in axes X, Y, and Z to adapt the sensor 8 to these variations, orienting the light profile 5 towards the part 2.

The first rotational movement RX on the first axis X, and the second rotational movement RY on the second axis Y, are carried out according to the information provided by the light reflected by the light profile 5. The inspection head 4 moves in the first axis X, and in the second axis Y, to emit the light profile 5 substantially perpendicular to the surface of the part 2 while the translation means 1 are moved.

The rotational movements RX and RY attempt to search for the most favorable orientation of the light profile 5 on the surface of the part 2, and mainly that the light profile 5 is emitted substantially perpendicular to the surface of the part 2, so that the information obtained by the sensor 8 is of good quality, because, if the light profile 5 is emitted tangentially to the surface of the part 2, information with a lot of noise will be obtained because it will reflect little light.

To carry out the first rotational movement RX, the inclination of the light profile 5 emitted on the part 2 is determined. The projection of the light profile 5 emitted on the part 2 is a straight line, or a set of straight lines, such that by determining the gradient of said straight line it can be known if the surface is inclined, and therefore how much the sensor in the first axis X must be rotated in order to orient the light profile 5 towards the part 2.

To carry out the second rotational movement RY, a set of light profiles 5 emitted on the part 2 is determined while the translation means 1 advance in a determined time period. The height variation of some profiles with respect to others also allows knowing if the surface is inclined, and therefore how much the sensor in the second axis X must be rotated in order to orient the light profile 5 towards the part 2.

The third translational movement MZ in the third axis Z is also carried out in accordance with the light reflected by the light profile 5. The inspection head 4 is moved in the third axis Z to keep the distance between the inspection head 4 and the part 2 stable while the translation means 1 are moved.

To carry out the third translational movement MZ, the distance between the inspection head 4 and the part 2 is determined, and the head 4 is moved in axis Z to keep said distance stable while the translation means 1 are moved. Thus, the distance between the sensor 8 and the part 2 is kept within the working range of the sensor 8. Working range of the sensor 8 is understood as the range of distances within which the sensor works correctly.

All the features described in relation to the inspection device are considered to be also described for the inspection process insofar as it concerned therewith.

## Claims

1. Surface defect inspection device comprising translation means (1) movable according to an advance direction (A) in a first axis (X), a supporting structure (3) with inspection means for inspecting the surface of a part (2), the inspection means have means for emitting at least one light profile (5) on the part (2) and means for viewing the light reflected by the light profile (5) emitted on the part (2), and a control unit which is configured to process the reflected light and detect surface defects in the part (2), **characterized in that** the inspection means comprise at least one mobile inspection head (4), and **in that** the control unit is additionally configured to move the inspection head (4) in accordance with the light reflected by the light profile (5) while the translation means (1) are moved in the advance direction (A), orienting the light profile (5) towards the part (2).

2. Device according to claim 1, wherein the inspection head (4) is mobile with respect to the supporting structure (3) according to a first rotational movement (RX) on the first axis (X), a second rotational movement (RY) on a second axis (Y) which is transverse to the first axis (X), and a third translational movement (MZ) in a third axis (Z) which is perpendicular to the plane formed by the first axis (X) and the second axis (Y), the control unit being configured to move the inspection head (4) according to the rotational movements (RX, RY) and translational movement (MZ) in accordance with the light reflected by the light profile (5) while the translation means (1) are moved in the advance direction (A), orienting the light profile (5) towards the part (2).

3. Device according to claim 2, wherein the inspection head (4) comprises a linear unit (6) movable in the third axis (Z) which has at one of its ends a support (7) of a sensor (8) having the means for emitting the light profile (5) and viewing the light reflected by the light profile (5).

4. Device according to the previous claim, wherein the support (7) of the sensor (8) has a first frame (9) and a second frame (10), the first frame (9) is joined in rotation with the sensor (8) to rotate the sensor (8) in the first rotational movement (RX) on the first axis (X), and the second frame (10) is joined in rotation with the first frame (9) to rotate the sensor (8) and the first frame (9) in the second rotational movement (RY) on the second axis (Y).

5. Device according to any of the previous claims, wherein the supporting structure (3) is a gantry which is arranged in an upper position above the translation means (1), and the translation means (1) are configured to translate the part (2) according to the advance direction (A) in the first axis (X),

6. Device according to the previous claim, wherein the supporting structure (3) has a set of inspection heads (4) which are arranged in a first row upstream of the supporting structure (3) and a second row downstream of the supporting structure (3) according to the advance direction (A) of the translation means (1), and wherein the heads are arranged in an alternate manner, a head of the second row being arranged between two heads of the first row.

7. Device according to claim 5 or 6, wherein the gantry is formed by a crossbeam (23) supporting the inspection heads (4) and side columns (24) supporting other inspection heads (4) for laterally inspecting the part (2).

8. Device according to the previous claim, wherein each side column (24) has a first inspection head (4) arranged upstream of the column (24) and a second inspection head (4) arranged downstream of the column (24) according to the advance direction (A) of the translation means (1).

9. Device according to any of the previous claims, wherein the light profile (5) is emitted on the part (2) in a direction transverse to the advance direction (A) of the translation means (1).

10. Device according to any of the previous claims, wherein the inspection head (4) has a laser profilometer (8).

11. Vehicle body surface defect inspection line using the inspection device according to any of the previous claims.

12. Surface defect inspection process by means of a surface defect inspection device comprising translation means (1) movable according to an advance direction (A) in a first axis (X), a supporting structure (3) with inspection means for inspecting the surface of a part (2), the inspection means have means for emitting at least one light profile (5) on the part (2) and means for viewing the light reflected by the light profile (5) emitted on the part (2), and a control unit which is configured to process the reflected light and detect surface defects in the part (2),
**characterized in that** the process comprises:
- moving the translation means (1) in the advance direction (A),
- emitting the light profile (5) on the part (2),
- viewing the light reflected by the light profile (5) emitted on the part (2), and
- moving the inspection head (4) in accordance with the light reflected by the light profile (5) while the translation means (1) are moved in the advance direction (A), orienting the light profile (5) towards the part (2).

13. Process according to the previous claim, wherein the inspection head (4) moves with respect to the supporting structure (3) according to a first rotational movement (RX) on the first axis (X), a second rotational movement (RY) on a second axis (Y) which is transverse to the first axis (X), and a third translational movement (MZ) in a third axis (Z) which is perpendicular to the plane formed by the first axis (X) and the second axis (Y).

14. Process according to the previous claim, wherein the inspection head (4) moves in the first axis (X) and in the second axis (Y) to emit the light profile (5) substantially perpendicular to the surface of the part (2) while the translation means (1) are moved.

15. Process according to claim 13 or 14, wherein the inspection head (4) moves in the third axis (Z) to keep the distance between the inspection head (4) and the part (2) stable while the translation means (1) are moved.
